# EUROPEAN PATENT APPLICATION

(11) **EP 1 764 729 A1**
(43) Date of publication of application: **21.03.2007**
(21) Application number: 05425651.6
(22) Date of filing: 19.09.2005
(51) Int. Cl.: G06Q 10/00

(54) **Equipment for handling article picking operations**

(71) Applicant: Paglieri Sell System S.p.A., 15068 Pozzolo Formigaro (IT)
(72) Inventor: Ferrari, Giancarlo c/oPaglieri Sell System S.p.A., 15068 Pozzolo Formigaro AL (IT); Milanese, Pierfranco, 15068 Pozzolo Formigaro AL (IT); Provera, Nilo c/o Paglieri Sell System S.p.A., 15068 Pozzolo Formigaro AL (IT)
(74) Representative: Perani, Aurelio

(57) **Abstract**

Equipment (1) for handling the operations of picking a plurality of articles (Iₙ) in an order to be executed comprising communication means (10) to receive input data (DATAIN) of the articles (Iₙ) to be picked, memory means (14) for storing the article identifier codes (ICₙ) in memory, a graphic interface (15) capable of displaying spatial position information (POSITION(n)) for each article (Iₙ), sensor means (16) to detect the article identifier code (ICₙ) for each article picked (Iₙ), processor means (17) to compare the article code detected (ICₙ) with the article code in memory (ICₙ) and indicator means (18) to indicate an error condition on the basis of the result of the comparison by the processor means (17).

## Description

This invention relates to equipment for handling operations of picking, from a storage area, a plurality of articles relating to an order to be executed, in accordance with the pre-characterising clause of claim 1.

In particular, this invention finds application in the logistics sector in the context of the preparation of containers for shipping which may contain a plurality of different articles listed in an order which has to be executed.

The logistics sector provides a link between the suppliers or manufacturers of different product lines and customers, or vendors of one or more lines of products.

The vendor keeps a check on the number of articles in each product line present in his commercial business at all times. When the number of items in one or more of the product lines falls below a minimum stock limit, the vendor sends an order to the logistics company responsible for supply of the products, which must in turn manage its own stores, ordering the products directly from the manufacturer.

At the present time, orders are handled quickly in a computerised way by the vendor or distributor. In particular the vendor enters a list of the desired articles and the quantities of each article in a terminal and sends the logistics company a file containing that information, as well as of course geographical information about the vendor.

The logistics company receives orders from a number of customers and using a computerised order management system executes orders and ships them to the various distributors.

A typical logistics structure provides for a storehouse area in which a plurality of containers each containing a predetermined number of articles of a specific product are stored, and an articles storage area in which the individual containers for each specific product are brought one by one. Typically the storehouse area is of very much greater size than the storage area, in that it may even contain tens of containers containing the same product. The operations of picking the containers from the storehouse are typically performed through automated systems for picking containers. On the contrary the operations of picking the individual articles from containers in the storage area are carried out by personnel responsible for the picking and preparation of containers for shipping on the basis of orders received from distributors.

In this instance each operator must search for the articles listed in the order, on the basis of an order including a list of articles, moving within the storage area, placing them in the container intended for the shipping of that order, closing up the container, applying a previously prepared identification label to the exterior of the container and placing the container on conveyor belts for transport to the area for sorting and loading onto the vehicles intended for delivery.

In order to speed up the work of the operators involved in picking the articles from the storage area and preparing containers for shipping, and as a result reducing shipping costs, each operator engaged in picking is provided with a portable device in which the list of articles which has to be picked in relation to the orders which have to be executed by that operator is stored in memory.

In particular, at the start of the working shift each operator connects his portable device to a network connection linked to a data processing unit in which the orders received from distributors for shipping and the operators to whom those orders are to be entrusted are stored in memory. The data processing unit transfers data relating to the orders and the corresponding articles to the operator's portable device. At this point the operator has a portable device in which the articles which have to be picked are stored in its memory. In particular the portable device has a display screen on which the article codes required to identify the positions of the articles within the storage area are displayed for each article.

Typically the storage area has a series of shelving units arranged in parallel with each other, each of which has a plurality of shelves for the storage of articles. Each shelf has an article code corresponding to the article code displayed on the display screen of the portable device of the operator responsible for picking.

Consequently, when the operator has to pick a particular listed article from the articles displayed on the portable display screen, he must identify the position of the article on the basis of the code shown there and check that it is correct.

Obviously this checking operation can give rise to a number of errors. For example failure to read the code displayed on the screen and/or the code shown on the shelf correctly may result in an incorrect article being picked and therefore shipped.

Further errors may be generated when the quantity of articles which has to be picked is greater than 1. In this case the operator's need to carry out the operations as quickly as possible, and his fatigue towards the end of the shift may cause the operator to make a mistake with the result that the articles picked may be in a smaller or greater quantity than the number specified in the order and indicated on the screen.

Such errors are unacceptable both for the company responsible for managing shipping of the articles and for the distributor who receives a container with a number of articles which differs from that specified in the order.

During the operation of picking articles the operator places the articles picked from the shelves into a container for shipping, checking off the picked articles. This operation may be performed manually on paper medium, such as a packing list, or directly on the screen of the portable device, where a screen of the pressure or touch-screen type is provided.

This operation of checking the articles picked may also cause problems in that the operator has to perform further check operations and at the same time check the task of searching for and picking the articles.

After all the articles picked for the order being handled have been picked and placed in the container for shipping, the operator affixes a previously prepared label on which the articles relating to the order executed are coded, for example using a bar code, to the outside of the container.

However the many operations performed by the operator in searching for the articles, checking their position, picking the quantity shown in the order and checking off the picked articles may result in the contents of the container which is ready for shipping differing from the list of articles coded on the label, as regards not only the quantity of items of each article, but also the articles themselves.

Thus the solution mentioned above, although overcoming the disadvantages present in paper systems, has many disadvantages because of the appreciable number of operations which have to be performed by the operator responsible for picking.

As a consequence it is felt that there is a need to have equipment for handling the article picking which will permit rapid and easy identification of the articles in the storage area and checking of the articles picked before they are placed in the container for shipping.

The object of this invention is to provide equipment for the handling of article picking operations which has structural and functional characteristics such as to satisfy the abovementioned requirements and at the same time overcome the disadvantages mentioned with reference to the known art.

This object is accomplished by equipment according to claim 1.

Further features and advantages of the equipment according to this invention will be apparent from the description below of a preferred embodiment provided indicatively and without restriction with reference to the appended figures, in which:

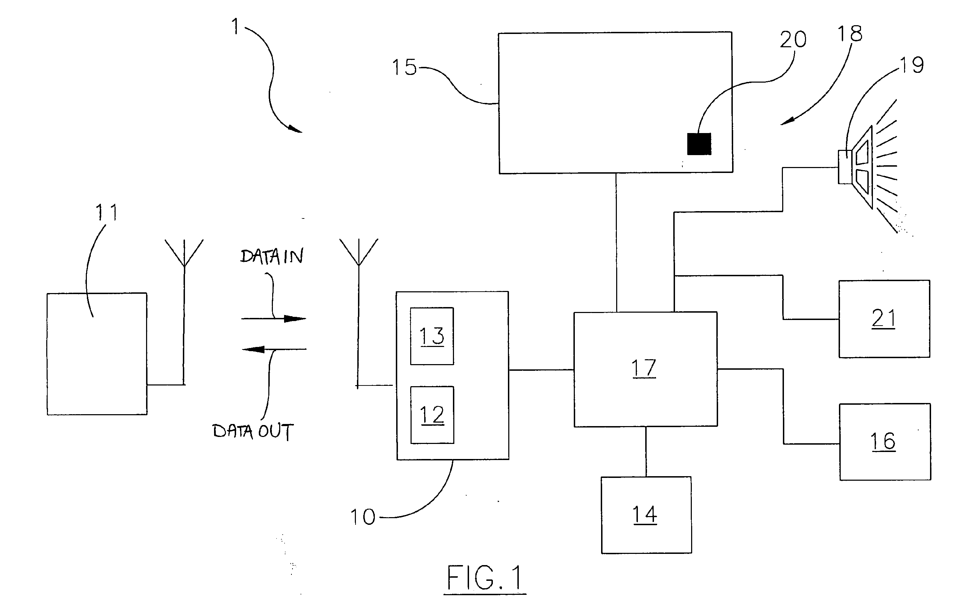

- Figure 1 shows a diagrammatical view of equipment according to this invention,

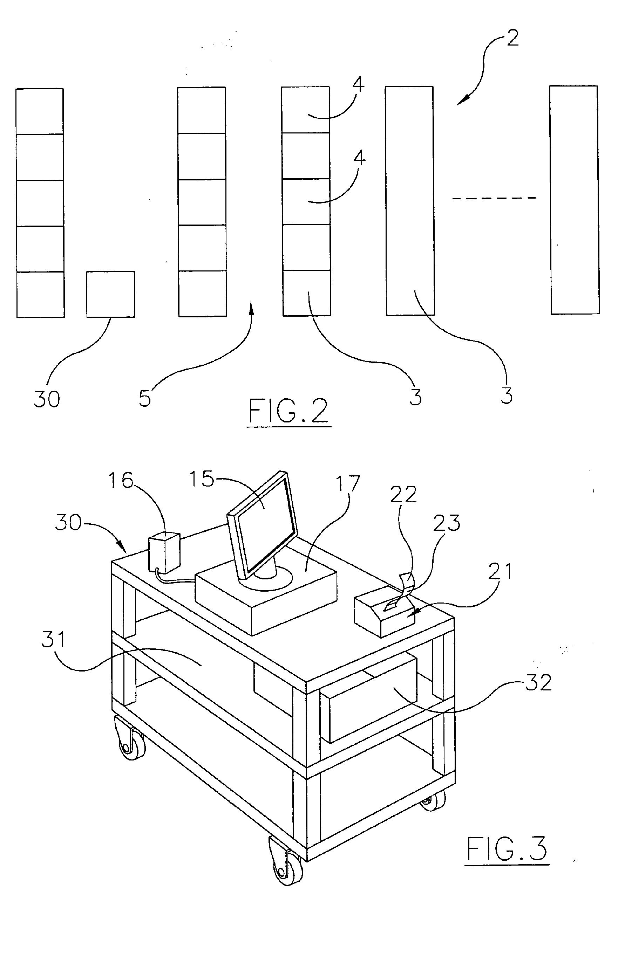

- Figure 2 shows an example of an article storage area,
- Figure 3 shows the equipment in Figure 1 installed on a truck intended to move within the area in Figure 2, and
- Figure 4 shows a detail of the equipment in Figure 1.

With reference to the figures, 1 indicates as a whole equipment for handling the operations of picking a plurality N of articles Iₙ relating to an order which has to be executed, ORDER.

Articles Iₙ are placed in a storage area 2 in a predetermined spatial position.

In the example storage area 2 has a plurality of shelving units 3 located parallel to each other to form a plurality of lanes 4 each of which identify a different product line. Each shelving unit 3 is in turn subdivided into several sectors 5 whose function will be more particularly described with reference to an embodiment of equipment 1. In the example illustrated in the appended figures, equipment 1 is installed in a mobile unit or truck 30 which is intended to move within article storage area 2. Trolley 30 has a housing 31 intended to receive one or more shipping containers 32. The use of a trolley 30 enables the operator to move within article storage area 2, picking the articles and placing them in the appropriate containers for shipping.

Equipment 1 comprises communication means 10 which can communicate with an order handling unit 11 to receive input data DATAIN for each of articles Iₙ included in the order which has to be executed, ORDER. All the orders which have to be executed which are received from distributors and the operators to whom these orders are to be entrusted are stored in memory in order handling unit 11. The input data DATAIN for each order ORDER comprise, for each article Iₙ, at least an article identifier code ICₙ, a spatial position identifier code PCₙ and the quantity Qₙ of articles Iₙ which have to be picked. The input data DATAIN may also include the shipping number NUM_DELIVER, created in a manner which is in itself known by order handling unit 11, the destination vector for the container CARRIER and the product line.

Advantageously communication means 10 comprise a receiver 12 capable of receiving the input data DATAIN from order handling unit 11. According to a particularly advantageous aspect communication means 10 also comprise a transmitter 13 for transmitting output data DATAOUT to order handling unit 11. This aspect will be described in greater detail below in the description with reference to a particular embodiment of equipment 1 according to the invention.

The transmission of data between equipment 1 and order handling unit 11 may take place, for example, through radio frequency waves, infrared waves or any other form of transmission which enables the operator to move within storage area 2 without the use of signal transmission cables.

The article identifier code ICₙ received from communication means 10 for each article Iₙ is stored in memory means 14 connected to communication means 10. Preferably memory means 14 comprise volatile memories such as RAM memories, Flash memories and the like.

Equipment 1 also comprises a graphic interface 15 which is capable of displaying at least one information item POSITION(n) on the spatial position of each article Iₙ which has to be picked, using the spatial position identifier code PCₙ so that the corresponding article Iₙ can be picked.

Advantageously the spatial position identifier code PCₙ for each article Iₙ comprises a set of three coordinates, for example Cartesian coordinates, Xₙ, Yₙ, Zₙ capable of identifying the spatial position of the corresponding article Iₙ. In this way graphic interface 15 displays spatial positioning information POSITION(n) based on the set of three coordinates Xₙ, Yₙ, Zₙ for each article Iₙ to be picked.

Advantageously the spatial position information POSITION(n) displayed by graphic interface 15 for article Iₙ to be picked depends on the set of three coordinates Xₙ, Yₙ, Zₙ for article Iₙ to be picked and the set of three coordinates X_{n-1,} Y_{n-1,} Zₙ₋₁ of the Iₙ₋₁ article picked previously. Obviously, in the case in which n = 1, either graphic interface 15 will display the first article which has to be picked, the set of three coordinates X_{n-1,} Y_{n-1,} Z_{n-1,} or X₀, Y₀, Z₀ will correspond to a predetermined position POSITION(0) from which the operator starts work. For example the position POSITION(0) may correspond to the access area 4' to a specific lane 4.

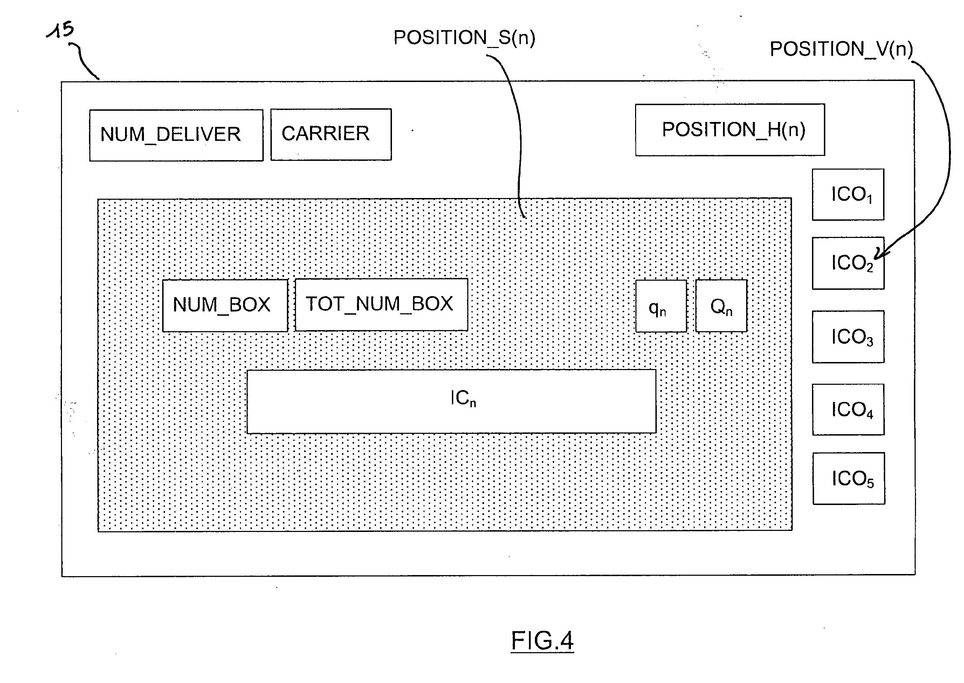

Advantageously the spatial position information POSITION(n) displayed by graphic interface 15 for an article Iₙ to be picked comprises a part POSITION_S(n) relating to the sector for the article Iₙ which has to be picked, which in the example in Figure 4 is represented by a predetermined area of the screen coloured with a colour which can be associated with a specific sector, a part POSITION_H(n) relating to the horizontal movement which has to be performed in order to pick article Iₙ starting from the spatial position of article Iₙ₋₁ picked previously, and a part POSITION_V(n) relating to the vertical position of article Iₙ to be picked, which in the example in Figure 4 is represented by a series of icons ICO₁ ICO₂, ..., ICO₅, each corresponding to a vertical level and activated corresponding to the vertical level, that is the shelving unit, in which article Iₙ which is to be picked lies.

From the above it will be seen that equipment 1 according to the invention enables the operator to quickly identify article Iₙ which has to be picked, and which is displayed by graphic interface 15, with absolute accuracy.

Graphic interface 15 can also display article code ICₙ associated with article Iₙ, the relative quantity Qₙ of articles Iₙ which have to be picked and a description of article Iₙ. This enables the operator to check correspondence between the article picked and that listed in the order, and the quantity of articles picked and that specified in the order, immediately and accurately.

Equipment 1 also comprises sensor means 16 to detect the article identifier code ICₙ for each article Iₙ picked so that the code detected ICₙ can subsequently be compared with the code ICₙ stored in memory 14. For this purpose equipment 1 comprises processor means 17 connected to sensor means 16 and memory means 14 which is capable of comparing the article identifier code ICₙ detected by sensor means 16 with the article identifier code ICₙ stored in memory means 14 for each picked article Iₙ.

Processor means 17 comprise for example a data processing unit of the known type which will therefore not be further described.

Equipment 1 further comprises indicator means 18 provided to indicate an error condition on the basis of the result of the comparison by processor means 17, in particular to indicate to the operator any mismatch between the code ICₙ detected by sensor means 16 and the code ICₙ stored in memory means 14.

In the case in which the article identifier code ICₙ stored in memory in memory means 14 is a bar code, sensor means 16 comprises a bar code reader which is capable of reading the bar code ICₙ for each article Iₙ picked, and processor means 17 compares the bar code in memory ICₙ with the code ICₙ read by bar code reader 16 for each article Iₙ picked.

According to a first embodiment indicator means 18 comprises an acoustic indicator 19 which can be activated by processor means 17 when the article identifier code ICₙ detected by sensor means 16 differs from the article identifier code ICₙ stored in memory means 14.

Alternatively indicator means 18 comprise a visual item 20 which can be activated by processor means 17 when the article identifier code ICₙ detected by sensor means 16 differs from the article identifier code ICₙ stored in memory means 14. For example it may be provided that indicator means 18 is connected to graphic interface 15 in such a way that visual item 20 is displayed by graphic interface 15 and is immediately obvious to the operator.

The use of sensor means 16 and processor means 17 for making a comparison between the code detected and the code stored in memory also makes it possible to display the progressive serial number of the articles which have to be picked on graphic interface 15. In fact whenever an article Iₙ is validly checked by processing unit 17 through a comparison between the code detected and the code in memory, graphic interface 15 suggests to the operator the next article I_{n+1,} or, where the quantity of articles Iₙ which has to be picked is greater than 1, again suggests article Iₙ. In this case it may be provided that graphic interface 15 will display a field of the "qₙ of Qₙ" type, where Qₙ is the quantity of articles Iₙ which has to be picked and qₙ corresponds to the qₙth article which has to be picked.

As stated, articles Iₙ are intended to be placed in a container for shipping. Advantageously graphic interface 15 displays the number of containers TOP _NUM_BOX required to complete the order and the serial number NUM_BOX for the container in which the article Iₙ picked must be put.

According to another feature of the invention, equipment 1 comprises printing means 21 to produce a check label 22 after the last article Iₙ has been detected by sensor means 16. In particular check label 22 produced by printing means 21 comprises a coded list of the articles picked and validly checked, or having an article identifier code ICₙ detected by sensor means 16 identical to the article identifier code ICₙ stored in memory means 14. This check label 21 is intended to be inserted into the shipping container containing validly checked articles Iₙ.

Advantageously, printing means 21 produces at least one container identifier label 23 which includes the list of articles Iₙ picked and validly checked. This container identification label 23 is intended to be affixed to the exterior of the container for shipping containing validly checked articles Iₙ.

Preferably printing means 21 produce two container identification labels 23 which include, for example, the consignment number, NUM_DELIVER, the destination vector for the container, CARRIER, the product line present within the container, the container number NUM_BOX in relation to the total number of containers TOP_NUM_BOX making up the shipping. Container identification labels 23 are intended to be affixed to the two opposite sides of container 32.

As suggested previously, according to a particularly advantageous aspect of the invention the communication means comprise a transmitter 13 for transmitting output data DATAOUT to order handling unit 11, in addition to receiver 12. In this way communication means 10 transmits article output data DATAOUT relating to the articles picked and validly checked to order handling unit 11. The articles output data DATAOUT include for each article Iₙ picked and validly checked the article identifier code ICₙ and a corresponding quantity Qₙ.

Equipment 1 also comprises power supply means 25 to power communication means 10, memory means 14, graphic interface 15, sensor means 16, processor means 17, indicator means 18 and printing means 21.

In the example, power supply means 25 takes the form of for example a rechargeable battery unit for removable batteries housed in a suitable seat in mobile unit 30.

In accordance with a further aspect, the invention relates to a process for picking a plurality of articles Iₙ relating to an order which has to be executed, the articles I being located in an article storage area 2 in a predetermined spatial position. The procedure comprises the steps of:
a) communicating with an order handling unit 11 to receive data DATAIN for each of the articles Iₙ in the order which has to be executed. The DATAIN data include for each article Iₙ at least one article identifier code ICₙ, one spatial position identifier code PCₙ and the quantity of articles Qₙ which have to be picked,
b) storing at least the corresponding article identifier code ICₙ for each article Iₙ in memory,
c) displaying at least one item of spatial position information POSITION(n) on a graphic interface 15 in relation to the spatial position identifier code PCₙ for each article Iₙ so that the corresponding article Iₙ can be picked,
d) detecting the article identifier code ICₙ for each article picked,
e) comparing the article identifier code detected ICₙ with the article identifier code ICₙ stored in memory for each article picked Iₙ, and
f) indicating an error condition on the basis of the result of the comparison performed in step e).

Advantageously step a) is preceded by a step of operator recognition and line selection.

An embodiment of equipment 1 according to the invention is described below in the case of an order which has to be executed containing the following articles and corresponding quantities:

| Article code | Article name | Quantity |
|---|---|---|
| I₁ | Article A | 1 |
| I₂ | Article B | 4 |
| I₃ | Article C | 2 |
| I₄ | Article D | 1 |

The example is described on the basis of an initial condition in which the operator is located in storage area 2 and equipment 1 is ready to receive the first order which has to be executed from order handling unit 11.

In a manner which is in itself known, the operator activates equipment 1 so that receiver 12 of communication means 10 of equipment 1 receives input data DATAIN for first article I₁ included in the order which has to be executed from order handling unit 11. The input data DATAIN include the article identifier code IC₁, the spatial position identifier code PC₁ for the article I₁ and the quantity Q₁ of articles I₁ which have to be picked.

Alternatively, order handling unit 11 may transmit input data DATAIN for all articles Iₙ in a particular order or in all orders in one working day to equipment 1, according to data transmission optimisation criteria and according to the memory capacity of memory means 14 of equipment 1.

Data processing unit 17 stores the article identifier code IC₁ in memory 14 and produces the spatial position identifier code PC₁ to display spatial position information POSITION(1) on graphic interface 15.

The spatial position information POSITION(1) for article I₁ comprises a reference to the sector in which article I₁ is located, the horizontal movement which has to be made in relation to position POSITION(0) in order to reach the shelving unit on which article I₁ lies, the number of the shelves starting from the bottom on which article I₁ lies, the serial number Q₁ of articles I₁ which have to be picked and the total number Q₁ of articles I₁ which have to be picked.

In the example the operator must position himself in the green sector moving forward by five shelving units and will find article I₁ on the second level. Graphic interface 15 also displays "1/1" to inform the operator that he must pick the first article out of a total of one article.

Subsequently, through bar code reader 16 the operator reads the bar code IC₁ for article I₁. Processing unit 17 compares the code IC₁ read by bar code reader 16 with the code IC₁ stored in memory 14.

If the code read IC₁ is the same as the code IC₁ in memory, the information for picking of the next article I₂ is displayed on graphic interface 15.

Conversely, if the code IC₁ read is different from the code IC₁ in memory, processing unit 17 activates indicator means 18, in the specific instance acoustic indicator 19, and/or causes visual item 20 to be displayed on graphic interface 15. In this way the operator is made aware of the error and can quickly check the information displayed by graphic interface 15 to identify the title error (wrong lane, wrong sector, wrong shelving unit, wrong level).

Advantageously, equipment 1 may provide for processing unit 17 to activate transmitter 13 to transmit the erroneously read IC₁ code to order handling unit 11 so that the latter transmits the type of error made by the operator to receiver 12. This operation may be performed either by order management unit 11 itself, or by processing unit 17 of equipment 1 through comparing the spatial position data for the article I₁ which had to be picked and the article incorrectly picked I.

As mentioned, if the two codes, the read IC₁ and the IC₁ in memory, are the same, the information for picking of the subsequent article I₂ is displayed.

In the example described here four articles I₂ have to be picked. Thus graphic interface 15 will display "1/4", "2/4", "3/4", "4/4" in sequence to inform the operator that he must pick the first article out of a total of four articles, the second, the third and so on until the fourth and final article.

In this case the error indication may for example relate to the fact that the operator has picked one article too many.

When the last article I₄ read by bar code reader 16 is picked and validly checked by processing unit 17, printer means 21 prints out check label 22 which is to be placed in container for shipping 32 containing picked articles I₁, I₂, I₃, I₄. Printer means 21 also produces two container identification labels 23 which are to be affixed to container 32 externally on opposite sides.

Check label 22 enables the consignee of the container to be more certain of the articles present in the container and their quantities.

Container identification labels 23 on the other hand enable personnel responsible for handling the containers for shipping to identify the consignee quickly, for example through the colour of label 23 or through appropriate words displayed on label 23 itself. These labels 23 also make it possible to check that the container has actually passed through the strapping machines, for example through reading a bar code on label 23 itself.

When the last article I₄ has been picked, read by bar code reader 16 and validly checked by processing unit 17, processing unit 17 activates the transmitter 13 of communication means 10 to transmit the article output data DATAOUT for the articles picked and validly checked.

These output data DATAOUT may include a code for making up the order which has just been completed, or the article identifier code ICₙ and the quantity Qₙ for each article Iₙ.

In particular transmission of the article codes ICₙ and the corresponding quantities Qₙ actually placed in container 32 may be important when in the course of picking operations the operator has found that a particular article Iₙ is missing or that there is a smaller quantity than is necessary to complete the shipping, or if only one further article in addition to that picked is present.

In this case the operator may indicate the absence of article Iₙ through a suitable button provided on mobile unit 30 so that an operator responsible for maintaining stocks can go to the stores area to obtain a pack of the articles Iₙ in question. In order to avoid waiting for article Iₙ, the operator may continue with the order which has to be executed and alter the list of articles for picking by assigning a special code to missing article Iₙ, for example through the use of a data entry peripheral or a pressure screen connected to processing unit 17. This special code is processed by processing unit 17 so that when the last article of the order in question is picked by the operator check label 22 produced by printing means 21 includes a code or wording showing that the article in question is missing. Advantageously check label 22 may refer to a subsequent container in which the missing article is placed.

As may be seen from what has been described, the equipment according to this invention makes it possible to satisfy the requirements and overcome the disadvantages mentioned in the introduction to this description with reference to the known art.

In fact, as has been demonstrated, the equipment makes it possible to quickly and easily identify articles in the storage area and makes it possible to check the articles picked before they are placed in the container for shipping.

Obviously in order to satisfy contingent and specific requirements a person skilled in the art could make many modifications and apply many variants to the equipment according to the invention described above, all of which is however included within the scope of protection of the invention as defined by the following claims.

## Claims

1. Equipment (1) for handling the operations of picking of a plurality of articles (Iₙ) relating to an order to be executed, the said articles (Iₙ) being located in a predetermined spatial position in an articles storage area (2), the said equipment (1) comprising:
- communication means (10) capable of communicating with an orders handling unit (11) to receive input data (DATAIN) relating to each of the said articles (Iₙ) of the order to be executed, the said input data (DATAIN) comprising, for each article (Iₙ), at least an articles identifier code (ICₙ), a spatial position identifier code (PCₙ) and the quantity (Qₙ) of articles (Iₙ) to be picked,
- memory means (14) to store, for each article (Iₙ), at least the corresponding article identifier code (ICₙ),
- a graphic interface (15) capable of displaying, for each article (Iₙ), at least a spatial position information (POSITION(n)) in relation to the said spatial position identifier code (PCₙ) so that the corresponding article (Iₙ) can be picked,
- sensor means (16) to detect the article identifier code (ICₙ) for each article picked (Iₙ),
- processor means (17) connected to the said sensor means (16) and to the said memory means (14) capable of comparing, for each picked article (Iₙ), the article identifier code (ICₙ) detected by the said sensor means (16) with the article identifier code (ICₙ) stored in said memory means (14), and
- indicator means (18) to indicate an error condition when the said article identifier code (ICₙ) detected by the said sensor means (16) differs from the said article identifier code (ICₙ) stored in the said memory means (14).

2. Equipment (1) according to claim 1, in which the spatial position identifier code (PCₙ) for each article comprises a set of three coordinates (Xₙ, Yₙ, Zₙ) capable of identifying the spatial position of the corresponding article (Iₙ), the spatial position information (POSITION(n)) displayed by the said graphic interface (15), for each article (Iₙ) to be picked, being a function of the said set of three coordinates (Xₙ, Yₙ, Zₙ).

3. Equipment (1) according to claim 2, in which the said spatial position information (POSITION(n)) displayed by the said graphic interface (15) for an article to be picked (Iₙ) is a function of the set of three coordinates (Xₙ, Yₙ, Zₙ) for the article to be picked (Iₙ) and the set of three coordinates (Xₙ₋₁, Yₙ₋₁, Zₙ₋₁) for the article (Iₙ₋₁) picked previously.

4. Equipment (1) according to claim 2 or 3, in which the said articles (Iₙ) are located in one or more shelving units (3), each shelving unit (3) being subdivided into one or more sectors (5), the said spatial position information (POSITION(n)) displayed by the said graphic interface (15) for an article (Iₙ) to be picked comprising a part (POSITION_S(n)) relating to the sector of the article (Iₙ) to be picked, a part (POSITION_H(n)) relating to the horizontal movement which has to be performed in order to pick the article (Iₙ) starting from the spatial position of the article (Iₙ₋₁) picked previously, and a part (POSITION_V(n)) relating to the vertical position of the article (Iₙ) to be picked.

5. Equipment (1) according to any one of claims 1 to 4, in which the said article identifier code (ICₙ) stored in the said memory means (14) is a bar code, said sensor means (16) comprising a bar code reader capable of reading the bar code (ICₙ) of each picked article (Iₙ), the said processor means (17) comparing, for each picked article (Iₙ), the bar code (ICₙ) stored in the memory means (14) with the code (ICₙ) read by the said bar code reader (16).

6. Equipment (1) according to any one of claims 1 to 5, in which the said indicator means (18) include an acoustic indicator (19) which can be activated by the said processor means (17) when the said article identifier code (ICₙ) detected by the said sensor means (16) differs from the said article identifier-code (ICₙ) stored in the said memory means (14).

7. Equipment (1) according to any one of claims 1 to 6, in which the said indicator means (18) comprise a visual item (20) which can be activated by the said processor means (17) when the said article identifier code (ICₙ) detected by the said sensor means (16) differs from the said article identifier code (ICₙ) stored in the said memory means (14).

8. Equipment (1) according to claim 7, in which the said indicator means (18) are connected to the said graphic interface (15), the said visual item (20) being displayable by the said graphic interface (15).

9. Equipment (1) according to any one of claims 1 to 8, in which the said articles (Iₙ) are intended to be placed in one or more shipping containers (32), the said graphic interface (15) displaying the number of containers (TOT_NUM_BOX) necessary to complete the order and the serial number (NUM_BOX) of the container in which the picked article Iₙ has to be placed.

10. Equipment (1) according to any one of claims 1 to 9, comprising printing means (21) for printing a check label (22) upon detection of the last article (Iₙ) of the plurality of articles (Iₙ) of the order to be executed, the said check label (22) comprising a list of the picked and validly checked articles (Iₙ) having article identifier codes (ICₙ) detected by the said sensor means (16) equal to the article identifier codes (ICₙ) stored in the said memory means (14), the said check label (22) being intended to be inserted into the shipping container (32) containing the said validly checked articles (Iₙ).

11. Equipment (1) according to claim 10, in which the said printing means (21) print at least one container identification label (23) comprising the said list of articles (Iₙ) picked and validly checked, the said at least one container identification label (23) being intended to be affixed externally to the said shipping container (32).

12. Equipment (1) according to any one of claims 1 to 11, in which the said communication means (10) comprises a transmitter (13) for transmitting, to the said order handling unit (11), article output data (DATAOUT) on the articles (Iₙ) picked and validly checked, the said article output data (DATAOUT) comprising, for each article (Iₙ), the article identifier code (ICₙ) and the quantity picked (Qₙ).

13. Equipment (1) according to any one of claims from 1 to 12, in which the said communication means (10) communicates with the said order handling unit (11) through radio frequency waves.

14. Mobile unit (30) intended to move within an article storage area (2), comprising:
- an equipment (1) for handling the operations of picking articles according to any one of claims 1 to 13,
- power supply means (25) to power the communication means (10), the memory means (14), the graphic interface (15), the sensor means (16), the processor means (17) and the indicator means (18) of the said equipment (1),
- a housing (31) adapted to receive one or more shipping containers (32).

15. Process for picking a plurality of articles (Iₙ) of an order to be executed, the said articles (Iₙ) being located in a predetermined spatial position in an article storage area (2), the process comprising the steps of:
a) communicating with an order handling unit (11) to receive input data (DATAIN) of each of the articles (Iₙ) of the order to be executed, the said input data (DATAIN) comprising, for each article, at least an article identifier code (ICₙ), a spatial position identifier code (PCₙ) and the quantity of articles Qₙ) to be picked,
b) storing in memory, for each article (Iₙ), at least the corresponding article identifier code (ICₙ),
c) displaying on a graphic interface (15), for each article (Iₙ), at least one spatial position information (POSITION(n)) as a function of the spatial position identifier code (PCₙ) so that the corresponding article (Iₙ) can be picked,
d) detecting, for each picked article (Iₙ), the article identifier code (ICₙ),
e) comparing, for each picked article,(Iₙ) the article identifier code detected (ICₙ) with the article identifier code stored in memory (ICₙ), and
f) indicating an error condition in relation to the result of the comparison made in step e).

16. Process for picking a plurality of articles (Iₙ) in an order to be executed according to claim 15, comprising prior to step a) the steps of:
- recognising the operator responsible for picking the articles (Iₙ), and
- selecting the product line comprising the said plurality of articles (Iₙ) to be picked.
